# EUROPEAN PATENT SPECIFICATION

(11) **EP 4 052 358 B1**
(45) Date of publication and mention of the grant of the patent: **06.12.2023**
(21) Application number: 20882691.7
(22) Date of filing: 23.10.2020
(51) Int. Cl.: H02K 5/20, H02K 5/167, H02K 5/22, H02K 9/193, H02K 7/08, H02K 9/197, F04D 1/06, F04D 13/06, F04D 29/08, F04D 29/58, H02K 7/14, H02K 16/00, H02K 21/16, H02K 21/24

(54) **COMPACT, MODULAR, PUMP OR TURBINE WITH INTEGRAL MODULAR MOTOR OR GENERATOR AND COAXIAL FLUID FLOW**
KOMPAKTE, MODULARE PUMPE ODER TURBINE MIT INTEGRIERTEM MODULAREN MOTOR ODER GENERATOR UND KOAXIALFLUIDSTRÖMUNG
POMPE OU TURBINE COMPACTE, MODULAIRE, À MOTEUR OU GÉNÉRATEUR MODULAIRE INTÉGRÉ ET ÉCOULEMENT DE FLUIDE COAXIAL

(30) Priority: 30.10.2019 US 201916668665
(43) Date of publication of application: 07.09.2022
(73) Proprietor: Flowserve Pte. Ltd., Singapore 637345 (SG)
(72) Inventor: JUDGE, Scott C., Irving, Texas 75039 (US); DREISS, Andreas, Irving, Texas 75039 (US); HAVRILLA, Neil, Irving, Texas 75039 (US); OLEXSON, Jr., David, Irving, Texas 75039 (US)
(74) Representative: Petraz, Gilberto Luigi
(86) International application number: PCT/US2020/056972
(87) International publication number: WO 2021/086742

(56) References cited:
- WO-A1-99/08366
- WO-A1-2010/081123
- US-A- 6 034 465
- US-A1- 2002 106 290
- US-A1- 2005 196 269
- US-A1- 2005 196 269
- US-A1- 2007 048 158
- US-A1- 2009 208 349
- US-A1- 2013 213 325
- US-A1- 2019 145 428
- US-B1- 6 175 173
- US-B1- 6 175 173
- US-B1- 6 422 838
- US-B1- 6 422 838

## Description

### RELATED APPLICATIONS

This application claims the benefit of U.S. Application No. 16/668,665, filed October 30, 2019.

### FIELD OF THE INVENTION

The invention relates to pumps and turbines, and more particularly, to integral sealless pumps and turbines.

### BACKGROUND OF THE INVENTION

Rotodynamic pumps and turbines are often highly similar in their physical designs, such that the difference between a pump and a turbine can sometimes be mainly a question of use rather than structure. Accordingly, features of the present invention and of the prior art that are discussed herein with reference to a turbine or to a pump should be understood to refer equally to both, except where the context requires otherwise.

In a conventional rotodynamic pump design, fluid flow and pressure are generated by a rotor, also referred to as an "impeller," that is rotating inside a stationary pump casing. The torque required to drive the rotor is provided by an external motor and transmitted through a rotating shaft to the rotor that rotates within a pump housing. Similarly, in the case of a conventional turbine design, fluid flow and pressure are applied to a rotor, which in the case of a turbine is also referred to as a "runner," causing the rotor to rotate inside of a stationary turbine casing, and the rotation and torque generated by the rotor are transmitted through a rotating shaft to an external generator.

One of the difficulties of these approaches is that they require the use of dynamic seals to maintain the pressure boundaries at the location where the rotating shaft penetrates the stationary pump or turbine casing. These seals are a source of leakage and other failure modes. In addition, rigid baseplates are required to allow the pump and the motor or turbine and generator to be mounted and aligned with each other, so as to avoid vibration issues. Even with rigid baseplates, nozzle loads on the pump or turbine can cause alignment problems between the motor or generator and the mechanical seals.

These difficulties are avoided by designs that do not include shaft seals. Magnetic coupling drives, for example, do not require dynamic seals on the pump or turbine shaft, because the motor or generator is coupled magnetically through the pump housing to an internal shaft that is supported by product-lubricated bearings located within the housing. However, these designs still require careful alignment of the motor or generator with the rotor housing to couple the motor or generator with the rotor shaft as efficiently as possible. Also, the components used for magnetic coupling add complexity and cost to the design.

Another approach that avoids dynamic shaft seals altogether is to use an integral design, wherein the motor or generator is included within the same housing as the rotor, so that shaft seals are not required. Some of these integral so-called "sealless motor" or "sealless generator" approaches use a radial field motor or generator design, whereby magnets are attached at or near the outer radius of the rotor, which is sealed within a thin-walled "can," and an electromagnetic stator located outside of the sealed can surrounds the rotor. However, radial field designs necessarily require a significant increase in the diameter and length of the rotor housing. Another approach to integral pump designs is to implement an axial field motor or generator design, whereby a disk or "pancake" permanent magnet, brushless DC motor or generator is included within the rotor housing to provide high power density and create the most compact and lightweight single stage pump or turbine units possible.

However, it can be difficult to cool the motor or generator coils of an integral sealless motor pump or sealless generator turbine. Typically, special flow paths must be provided within the housing to shunt some of the working fluid through grooves in submerged bearings and/or through another appropriate path to extract heat arising from the coils of the motor or generator. The shunted working fluid is heated by convection from the stator wall and carries the heat away from the stator to be expelled along with the un-shunted working fluid.

Unfortunately, as the shunted fluid passes through passages adjacent to the stator wall, through a hollow rotating shaft, through the shaft bearings, and/or through other appropriate channels, a phase change may occur due to the combination of fluid heating and/or a pressure drop due to the transition from discharge to suction pressure. The resulting exposure to fluid in the vapor phase can result in motor/generator overheating and/or bearing failure. Furthermore, the requirement of diverting a certain fraction of the pump output or turbine input into a cooling flow necessarily reduces the efficiency of the pump or turbine.

Another disadvantage of pumps and turbines before the present invention that include a mechanically integral motor or generator is that each pump or turbine design necessarily requires a corresponding, integral motor or generator design. Accordingly, when a new pump or turbine design is introduced a new motor or generator design must also be introduced, even if the torque and electrical requirements of the new motor or generator remain unchanged as compared to an existing design. And if it is necessary to simultaneously produce and/or support a plurality of such pumps or turbines, then separate productions and/or inventories must be maintained for the distinct motor and generator designs.

In addition to the issues that are discussed above, another general problem that is encountered in the design of both integral and non-integral pumps and turbines is how to scale up the capacity of an existing pump or turbine design to meet the requirements of a new application, which generally requires redesigning the physical shape and size of the rotor, operating the rotor at a higher speed, and/or adding additional rotors.

The total head that is generated by a pump is a function of the rotor diameter and its rotation speed, while the flow delivery for a given rotor diameter and speed is determined by the rotor width. For a given rotor design, the maximum rotor speed is limited by the amount of torque that the motor can develop. The speed of rotation is also limited by both the frequency limitations of the inverter used to drive the motor and the NPSH (Net Positive Suction Head) available at the inlet of the rotor.

Similarly, in the case of a generator turbine, the generator places a "load" on the turbine rotor according the electromagnetic coupling between the rotating magnets and the generator coils, under the control of an inverter or other control electronics associated with the generator, such that the maximum output of the generator depends on the maximum torque that can be delivered to the generator by the rotor, which for a given fluid flow depends on the rotor diameter and width.

One approach to increasing output of a pump or turbine is therefore to increase the size of the rotor and the capacity of the motor or generator. However, the additional size and bulk that result from this approach can be problematic.

The size and bulk of the rotor casing and other components of a pump or turbine can be reduced, when higher fluid pressures or generator outputs are required, by using small diameter rotors operating at high speeds. However, this approach does not work for sealless motor and generator designs, because the rotor is also a component of the motor or generator. In particular, in axial sealless designs smaller diameter rotors provide smaller available disk areas for mounting permanent-magnets or inductive magnets, thereby limiting the torque that can be developed by the motor, or the electrical power that can be produced by the generator. Another limitation is the relative unavailability of sealless motor designs (magnetic rotors and stators) that can deliver a range of pressures and flow rates, and of sealless generator designs that operate efficiently over a range of pressures and flow rates.

Accordingly, for an axial motor sealless pump or turbine, the pump head or turbine output provided by a rotor can only be increased by enlarging the diameter of the rotor. However, this approach increases the bulk of the apparatus, because it requires use of a larger and thicker rotor casing and other structural components to contain the larger components and higher fluid pressures.

Increasing output by expanding the number of rotors can also be problematic for any pump or turbine design. In a non-integral, multi-stage pump or turbine, a single, large motor provides torque to a plurality of rotors through a common shaft, or a single, large generator receives torque from a plurality of rotors through a common shaft. This approach typically requires a large and bulky motor or generator, and further requires that the shaft must be enlarged in diameter and increased in length as the number of rotor stages is increased, so that the combined torque and weight of all of the rotors can be accommodated.

Whether configured in a horizontal or a vertical arrangement, these long shafts with multiple rotor stages require larger bearings and increase the likelihood of bearing failures. In addition, the long shafts of multi-stage pumps can lead to various roto-dynamic issues related to shaft deflections and critical speeds. Because of these issues, and for other reasons, each multi-stage pump design is applicable only to a specified maximum number of stages, and cannot be easily scaled to accommodate requirements for different numbers of stages. Instead, scaling of an existing design typically requires a new pump or turbine design.

Furthermore, the elongated shaft, multi-stage approach requires that all of the rotors rotate at the same speed, which can limit the efficiency and/or NPSH (net positive suction head) performance of the design. In addition, a failure of any one stage in a multi-stage pump will cause an immediate and total failure of the entire pump or turbine.

Of course, one alternative to designing and implementing a multi-stage integral or non-integral pump or turbine is simply to interconnect a plurality of single-stage pumps or turbines in series and/or parallel. In the case of pumps, the output of each pump in series becomes the input of the next pump, which further increases the pressure, while the outputs of pumps configured in parallel are combined to increase output flow. In the case of turbines, the fluid flows through the rotors, either in series or in parallel, and the electrical outputs of the turbine generators are combined in series and/or in parallel to create a higher total output voltage and/or current.

However, this approach of combining a plurality of pumps or turbines into a multi-stage apparatus requires the use of bulky and complex fluid interconnections or manifolds, so that excessive space is consumed. In addition, the reliability of the apparatus is reduced, because the number of hoses and/or other fluid connections, and therefore the opportunities for leaks and/or other failure modes, increases as the number of pumps or turbines is increased.

It has been suggested that a sealless disk motor pump might include more than one motor within a common housing. However, the fluid interconnections and motor/generator cooling requirements of a sealless disk motor design tend to limit this approach to only two stages at most.

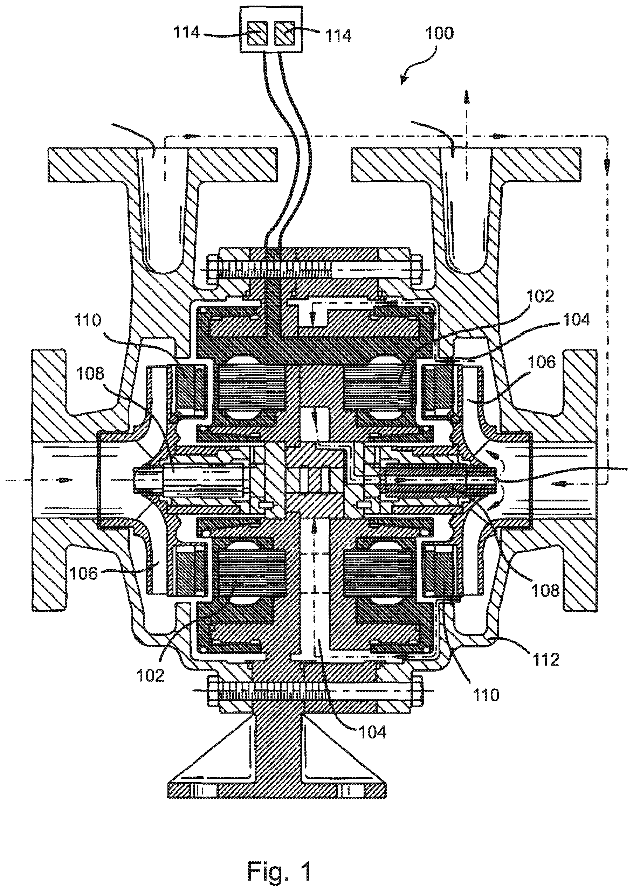

For example, with reference to Fig. 1, one approach that has been proposed includes two centrifugal pump stages within a single sealless motor design **100,** whereby each stage is driven by its own motor **102,** and whereby the two stages are positioned back-to-back, such that the two motors **102** are included within a common central space within the casing **112,** so that they can be cooled by a common process flow path **104.** In the example shown in Fig. 1, the two rotors **106** face in opposite directions, and each includes permanent magnets **110** attached to a rear side thereof.

In some versions of this approach, the motors **102** are controlled by separate variable frequency drives ("VFD's") **114** and each of the rotors **106** rotates about a separate, fixed shaft **108.** In other versions, the motors share a common controller and/or shaft. By placing the two motors **102** within the same volume, the cooling path **104** in this approach is only slightly more complex than the cooling path in a single stage integral motor design, and the loss of efficiency due to diverting flow into the cooling path is minimized. However, this approach is, by its nature, limited to only two stages, and there is no obvious approach for expanding the design beyond the two-stage limit.

Document US 2019/145428 A1 describes a compact, modular, integral pump or turbine with coaxial fluid flow. Document US 6 175 173 B1 describes a tube pump. Document US 2005/196269 A1 describes a stacked self-priming pump and centrifugal pump. Document US 2009/208349 A1 describes a solids handling hydro-finn pump. Document WO 99/08366 A1 describes a pump driven by brushless motor. Document US 6 422 838 B1 describes a two-stage, permanent-magnet, integral disk-motor pump. Document WO 2010/081123 A1 describes improvements in an electrically controlled turbocharger. Document US 2007/048158 A1 describes a low profile pump.

What is needed, therefore, is an integral, "sealless" pump or sealless turbine design that is compact and modular, such that more than two of the pump or turbine modules, preferably up to an arbitrarily large number, can be combined in series without bulky fluid interconnections therebetween. It is further preferable in embodiments that little or no process fluid be diverted away from the primary flow path for cooling the motor or generator within each module, that the rotors in the modules rotate separately, and/or that the motors/generators in the modules be separately controllable. It is still further desirable that the motor or generator that is integral to the pump or turbine module should itself also be modular, so that the same motor or generator design can be incorporated into different pump or turbine designs.

### SUMMARY OF THE INVENTION

The present invention is a "sealless" motor pump or sealless generator turbine that is configured as a highly compact module having a "concentric" flow design. The disclosed modular design enables more than two of the pump or turbine modules, preferably up to an arbitrarily large number, to be combined in series without bulky fluid interconnections therebetween, and with the rotor in each module rotating separately on its own shaft or other supports. In embodiments, little or no process fluid is diverted away from the primary flow path for cooling the motor or generator within each module. In various embodiments, the rotors in the module motors or generators are separately controllable. And in embodiments, the motor or generator that is integral to the pump or turbine modules is itself modular, so that the same motor or generator design can be incorporated into different pump or turbine designs.

According to the present invention, the coil housing, i.e. stator housing, of the motor or generator is concentrically surrounded by the outer housing of the module, i.e. the module housing, thereby creating an annular space therebetween surrounding the motor or generator coils and centered on a primary axis of the motor or generator. Working fluid enters the module axially through a proximal inlet that is located substantially along the primary axis, and is discharged axially from the module through a distal outlet that is also located substantially along the primary axis. Within the module, the working fluid flows symmetrically past the stator housing that surrounds the motor or generator coils through either a plurality of substantially identical flow passages arranged symmetrically about the circumference of the stator housing, or through a single, annular flow passage that surrounds the stator housing. This symmetric distribution of the flow passage(s) in the region surrounding the motor or generator coils provides a compact design wherein the module housing is only moderately larger in diameter than the stator housing of the motor or generator.

In various embodiments suitable for use with relatively cool working fluids, the flow passages or single annular flow passage is/are in direct thermal contact with the housing of the motor or generator coils, thereby directly cooling the motor or generator coils. In some of these embodiments, more than 80% of the working fluid is brought into thermal contact with the motor or generator coil housing, and at least 20% of the motor or generator coil housing is in thermal contact with the working fluid. In various embodiments, more than 90% of the working fluid is brought into thermal contact with the motor or generator coil housing, and at least 50% of the motor or generator coil housing surface is in thermal contact with the working fluid.

In multi-passage embodiments suitable for use with hot working fluids, thermal insulation is provided between each of the plurality of substantially identical flow passages and the housing of the motor or generator coils. In some of these embodiments, a cooling fluid is circulated around the motor or generator coil housing in an annular space, such that the cooling fluid is in direct contact with the housing of the motor or generator coils, thereby cooling the motor or generator coils and protecting them from any residual heating by the hot working fluid.

In other embodiments where hot working fluid flows through a single, annular flow passage, thermal insulation is provided between the annular flow passage and the housing of the motor or generator coils, and in some of these embodiments a separate cooling fluid is circulated through a cooling annulus or cooling passages provided beneath the thermal insulation.

In embodiments, the concentric design of the present invention is implemented as a highly compact module that can be used alone or in series with a plurality of identical modules to form a multi-stage pump or turbine in which each stage includes both a rotor and an associated motor or generator. This modular design allows combination of the modules into an arbitrary number of stages without adding additional complexity or complications to the design, operation, and maintenance of the apparatus. In particular, because the rotor in each module is supported by a dedicated shaft or other supports, high stage counts do not raise any issues regarding shaft size, shaft deflection, roto-dynamics, bearing loads, motor alignment, or alignment between stages.

In some embodiments, the rotor of each module is fixed to a rotating shaft. In other embodiments, the shaft of each module is fixed, and the rotor rotates about the shaft, e.g. on bearings. For example, the shaft for each module can be inserted through the rotor hub and threaded into the module housing, which facilitates easy assembly and maintenance without special tools.

Certain embodiments include modules having an inverted rotor/stator configuration, whereby the rotor and the stator can both rotate independently from each other in opposite directions. Some embodiments include stators and/or diffusers that rotate individually. In some of these embodiments, the diffusers are implemented in a manner similar to the disclosure of patent application US15/101,460.

In still other embodiments, the disclosed module does not include a shaft. Instead, a wear ring clearance on the front of the rotor acts as the primary radial and axial bearing. Torque is thereby transmitted directly from or to the electromagnet stator coils of the motor to the rotor, or electromagnetic energy is transferred directly from the rotor to the generator, without the use of a rotating shaft.

In some embodiments, the disclosed pump or turbine module includes a radial motor or generator design, whereby a plurality of permanent magnets are attached at or near the periphery of the rotor, and the rotor is surrounded by an electromagnet stator. In other embodiments, the disclosed module includes an axial, "disk" or "pancake" motor or generator, whereby a plurality of permanent magnets are attached to a rear side of the rotor, and are caused to pass close to electromagnetic coils of an axially adjacent stator as the rotor is rotated. Some embodiments that include permanent magnet motors or generators further include variable speed drives that enable the synchronous operating speeds of the modules to rise above 3600 rpm.

Other embodiments include induction motors or generators that utilize non-permanent magnets, such as "squirrel cage" rotor coils in which currents are induced by the stator electromagnets during pump or turbine operation.

In embodiments, the motor or generator coils are sealed from the working fluid using static sealing methods, which eliminates any need for dynamic mechanical seals, and avoids the problems of alignment, leakage, and/or maintenance that would otherwise arise therefrom.

Various embodiments having centrifugal designs include radial flow rotors. Some of these embodiments include rotors with specific speeds up to 2,000 US units, 4000 US units, or even 5000 US units. Other embodiments include stages with radial flux motor or generator designs and higher specific speed mixed flow rotor designs.

In embodiments, the rotors are axially and radially located by product-lubricated bearings provided in each modular stage, which allows the bearings in each stage to be designed to handle the loads from that stage only. This approach completely eliminates the risk of overloading bearings due to combined stage loading in a multistage arrangement, and provides a design that is more compact because there is no need to use oversized bearings. Using the working fluid as a lubricant for the bearings in embodiments also eliminates the need for an external oil lubrication system and greatly simplifies the overall pump design. In embodiments, combined radial and one-way thrust bearings are used in place of separate axial and radial bearings.

In various embodiments, the motors or generators in a multi-stage apparatus are separately controllable. Embodiments include a plurality of variable frequency drives (VFD's), and in some of these embodiments the motor or generator in each stage is independently controlled by a dedicated VFD. One of the key benefits in some of these embodiments is that the first stage can run at lower speeds than the rest of the apparatus, so as to accommodate low net positive suction head ("NPSH") and off-peak conditions. In some applications, varying the speed of only the final stage provides a useful approach precisely controlling the output pressure and/or flow.

Providing individual VFD drives for each stage can also serve as a fail-safe redundancy, whereby if one stage fails, the rest will continue to operate and the apparatus will continue to function. The continued function after failure of a pump or turbine stage may be with reduced head and flow, or the speed of the remaining stages can be increased to compensate for the lost head and flow of the failed stage. This approach creates a failure scenario wherein the pump or turbine continues to operate, possibly at reduced head and flow, until an operator, after becoming aware of the stage failure, has time to safely shut down the system. In contrast, the failure of one stage in a traditional pump or turbine would result in failure of the entire apparatus, with a complete loss of performance and a sudden, uncontrolled shutdown of the system. Using a sensor-less motor along with an appropriate VFD also reduces the instrumentation required on each stage in various embodiments.

In various embodiments, the motor or generator that is included in each module is modular in design, whereby a given motor or generator design can be incorporated into a plurality of different pump or turbine designs. In particular, the plurality of permanent magnets or other magnetic devices that are included in the motor or generator included in a detachable, modular magnet structure that can be axially and rotationally constrained to be cooperative with the rotor of the pump or turbine. Axial and rotational constraint of the magnet structure can be by any means known in the art that is able to constrain the magnet structure both axially and rotationally in relation to the rotor. Embodiments include a snap ring that axially constrains the magnet structure and one or more pins that rotationally fix the magnet structure to the rotor. Other embodiments include threaded attachment of the magnet structure to the rotor or attachment by screws or bolts, whereby the magnet structure is constrained both axially and rotationally. According to the invention, the embodiments further include an electrical port that forms a sealed conduit between the motor or generator housing and the pump or turbine housing so as to provide a path for electrical leads and/or control lines to extend between the stator and the environment external to the pump or turbine.

In embodiments, the magnet structure and/or the stator portion of the motor or turbine that contains the stator coils is/are modular and fully sealed, thereby requiring only mechanical attachment to the housing of the pump or turbine in proximity to each other. In various embodiments, sealed modular magnet structures and/or sealed modular stator assemblies of the present invention can be implemented in different combinations, rendering it unnecessary to configure new instantiations of the magnet structure and/or stator assembly each time a new pump or turbine module is designed.

A first general aspect of the present invention is a sealless pump or turbine module having an integral motor or generator according to claim 1. The module includes an inlet located at a proximal end of the module, the inlet being on a central axis of the module, an outlet located at a distal end of the module, the outlet being on the central axis of the module, a module housing surrounding the module, a rotor suspended within the module housing, and a motor within the module housing configured to drive a rotation of the rotor, or a generator within the module housing configured to be driven by rotation of the rotor.

The motor or generator includes a stator within a sealed stator housing, the stator comprising at least one electromagnet directed toward the rotor, said stator housing being removably axially, radially, and rotationally fixable to the module housing, an electrical port formed in the stator housing and configured to form a seal with the module housing when the stator housing is fixed to the module housing, the electrical port providing a sealed passage through which electrical conductors can be directed for interconnection between the at least one electromagnet and apparatus that is external to the module housing, a plurality of magnetic devices assembled in a magnet structure that is removably constrained to be axially fixed and rotationally cooperative with the rotor, the magnetic devices being configured by the magnet structure to pass in proximity to the at least one electromagnet as the rotor rotates, and a flow path symmetrically distributed about the stator housing,

In addition, the module is configured to direct a flow of working fluid from the inlet through the flow path to the outlet such that the working fluid is symmetrically distributed about the stator housing as it flows past the stator within the flow path.

In embodiments, the flow path is an annular flow path surrounding the stator housing.

In any of the above embodiments, the flow path can include a plurality of flow passages arranged symmetrically about the stator housing.

In any of the above embodiments, the rotor can be suspended by a rotatable shaft, and the rotor can be fixed to the shaft, or the rotor can be suspended by a fixed shaft, and the rotor can be configured to rotate about the shaft.

In embodiments where the rotor is suspended by a fixed shaft, and the rotor is configured to rotate about the shaft, the rotor can be supported on the fixed shaft by a pair of bearings, one of which maintains an axial position of the rotor while the other of which provides radial support of the rotor, or the rotor can be supported axially and radially on the fixed shaft by a single, one-way thrust bearing. In any of these embodiments the rotor can be supported on the fixed shaft by at least one bearing that is lubricated by the process fluid. In any of these embodiments, the fixed shaft can be fixed to at least one of the stator housing and the module housing by threaded attachment.

In any of the above embodiments, the magnetic devices can be permanent magnets, or squirrel cage coils.

In any of the above embodiments, the flow path can extend over at least 50% of a surface of the stator housing, and at least 90% of the working fluid that flows through the module from the inlet to the outlet is caused to flow through in direct thermal contact with the stator housing.

In any of the above embodiments, the module can be configured to require all of the working fluid flowing from the inlet to the outlet to flow through the flow path.

Any of the above embodiments can further include thermal insulation interposed between the flow path and the stator housing, and a cooling fluid path formed between the thermal insulation and the stator housing, the cooling fluid path being in thermal communication with the stator housing and configured to enable an exchange of heat between the stator housing and a cooling fluid flowing through the cooling fluid path.

In any of the above embodiments, the stator can be configured to rotate independently of the rotor and in a direction that is opposite to a rotation of direction of the rotor.

Any of the above embodiments can further include a diffuser that is cooperative with the rotor but is driven by a separate diffuser motor and is thereby able to rotate independently of the rotor.

In any of the above embodiments, the electromagnet of the stator can be directed toward a radial periphery of the rotor, and the magnetic devices can be fixed near the radial periphery of the rotor, or the electromagnet of the stator can be directed toward a side of the rotor, and the magnetic devices can be fixed to the side of the rotor or to a disk that is coaxial with and proximal to the side of the rotor.

And in any of the above embodiments, the magnet structure can be sealed, thereby excluding the working fluid from reaching the magnetic devices.

A second general aspect of the present invention is a multi-stage apparatus comprising a plurality of interconnected modules. Each of the modules includes an inlet located at a proximal end of the module, the inlet being on a central axis of the module; an outlet located at a distal end of the module, the outlet being on the central axis of the module; a module housing surrounding the module; a rotor suspended within the module housing.

Each of the modules further includes a motor within the module housing configured to drive a rotation of the rotor, or a generator within the module housing configured to be driven by rotation of the rotor. The motor or generator includes a stator within a sealed stator housing, the stator comprising at least one electromagnet directed toward the rotor, said stator housing being removably fixable axially, radially, and rotationally to the module housing; an electrical port formed in the stator housing and configured to form a seal with the module housing when the stator housing is fixed to the module housing, the electrical port providing a sealed passage through which electrical conductors can be directed for interconnection between the at least one electromagnet and apparatus that is external to the module housing; a plurality of magnetic devices assembled in a magnet structure that is removably constrained to be axially fixed and rotationally cooperative with the rotor, the magnetic devices being configured by the magnet structure to pass in proximity to the at least one electromagnet as the rotor rotates; and a flow path symmetrically distributed about the stator housing.

In addition, each of the modules is configured to direct a flow of working fluid from the inlet through the flow path to the outlet such that the working fluid is symmetrically distributed about the stator housing as it flows past the stator within the flow path.

In embodiments of this general aspect, at least two of the motors or generators of the modules can be independently controlled so as to cause the corresponding rotors to rotate at different rates. And in some of these embodiments the two, independently controlled motors or generators are controlled by separate variable frequency drives.

In any of the above embodiments of this general aspect, the modules can be configured such that the apparatus as a whole is able to continue functioning as a pump or as a turbine despite failure of at least one of the modules included in the apparatus.

Any of the above embodiments of this general aspect can further include control electronics that provide shared support to at least two of the modules.

In any of the above embodiments of this general aspect, the plurality of interconnected modules can include at least three interconnected modules.

And in any of the above embodiments of this general aspect, the magnet structure in each of the modules can be sealed, thereby excluding the working fluid from reaching the magnetic devices.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1 is a cross-sectional illustration drawn to scale of a prior art two-stage integral motor pump cooled by a dedicated cooling flow;
Fig. 2A is a cross-sectional, simplified illustration of a single-stage module of the present invention having a radial motor design;
Fig. 2B is a cross-sectional illustration from the side drawn to scale of a two-stage embodiment of the present invention having an axial motor design;
Fig. 2C is an exploded sectional view from the side drawn to scale of one of the rotor assemblies in an embodiment similar to Fig. 2B;
Fig. 2D is an exploded perspective view drawn to scale of the rotor assembly of Fig. 2C drawn to scale;
Fig. 2E is an exploded perspective sectional view drawn to scale of the rotor assembly of Fig. 2C.
Fig. 2F is a front perspective view drawn to scale of one of the stator assemblies of an embodiment similar to the embodiment of Fig 2B;
Fig. 2G is a side perspective view drawn to scale of the stator assembly of Fig. 2F;
Fig. 2H is a simplified cross-sectional view of an embodiment that includes an annular flow path through the annular space;
Fig. 21 is a cross-sectional view similar to Fig. 2H, but including an additional concentric layer of thermal insulation and a concentric cooling annular passage;

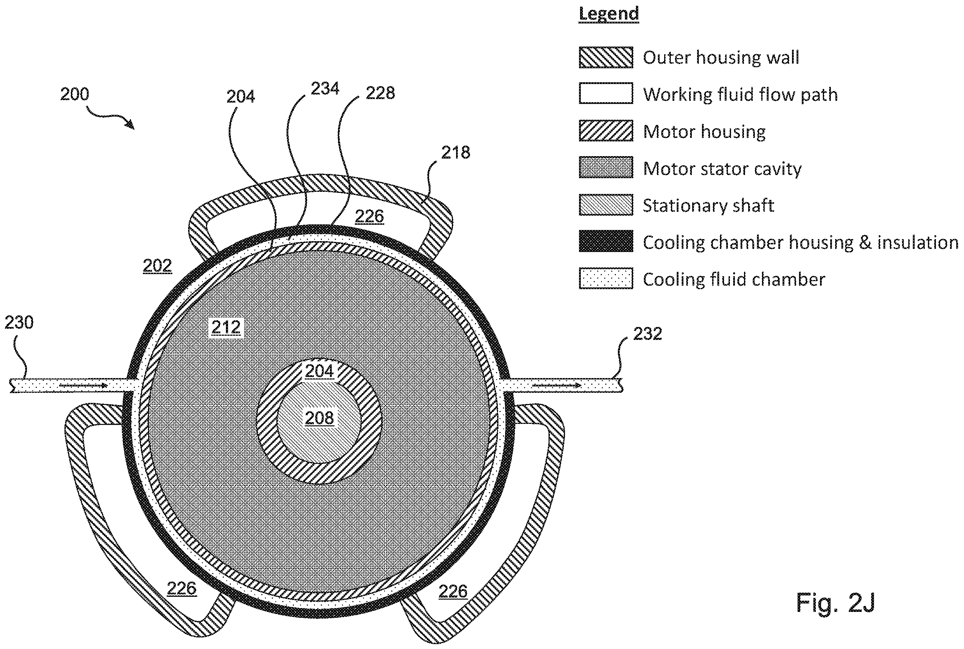

Fig. 2J is a simplified cross-sectional view of an embodiment that includes a plurality of flow paths that are equally distributed about the coil housing of the motor or generator and insulated therefrom;

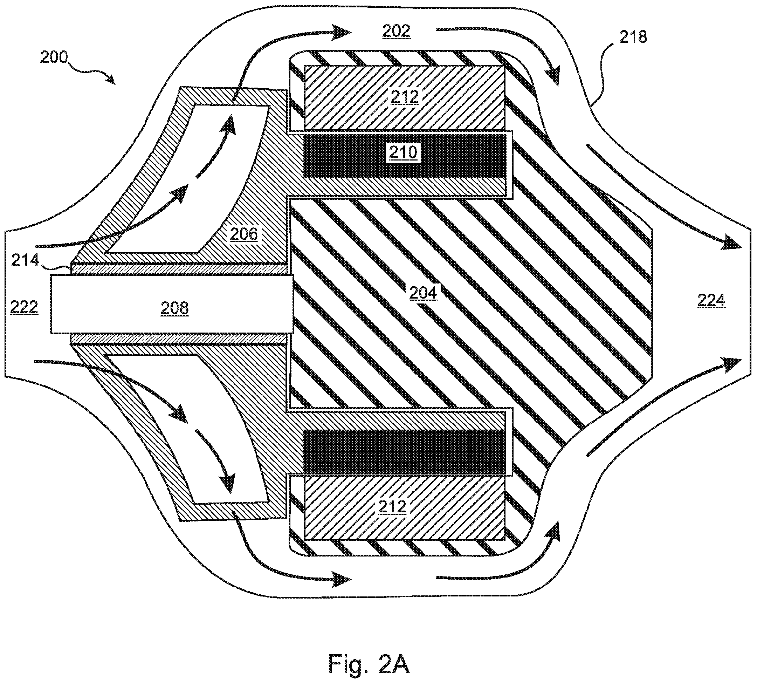

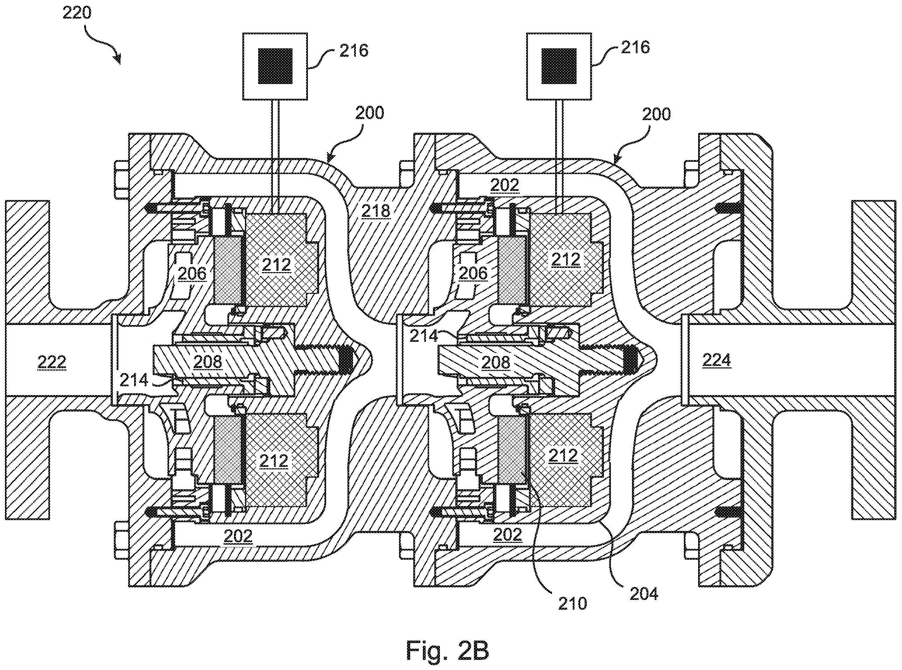

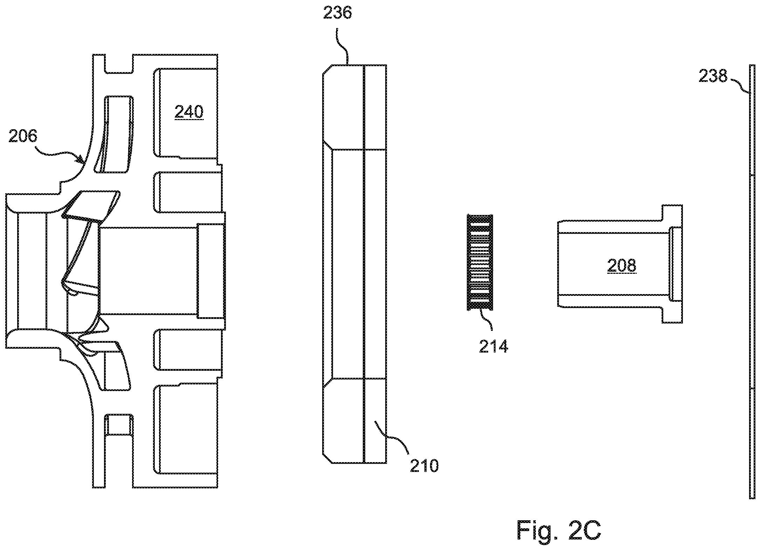

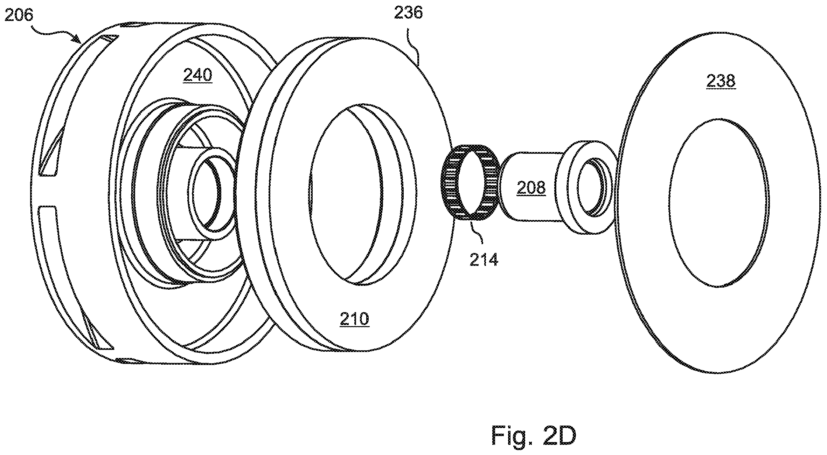

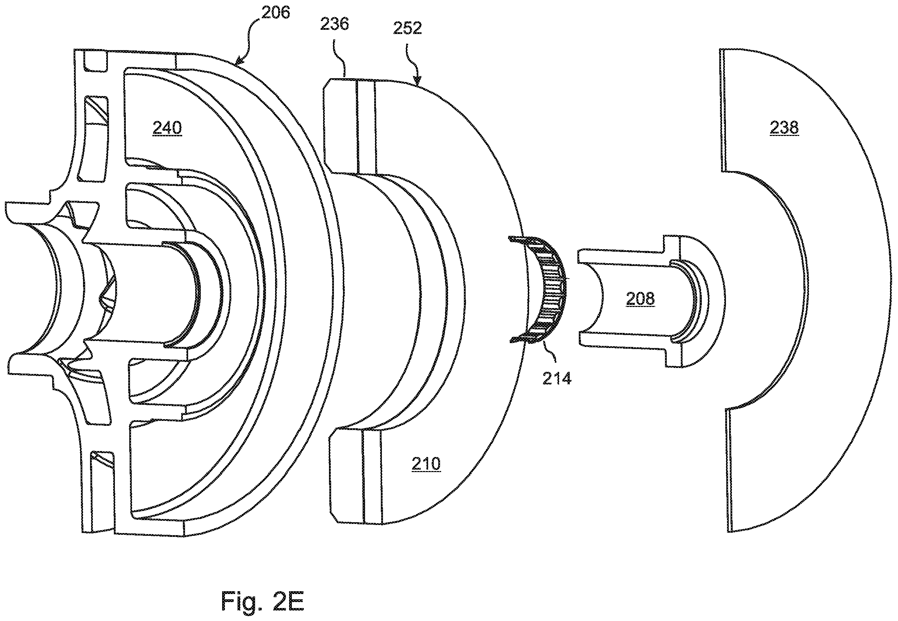

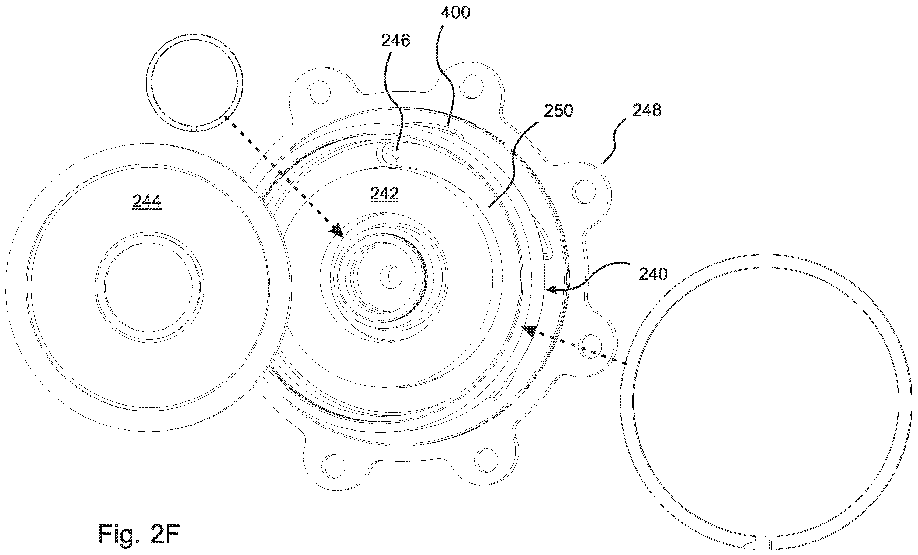

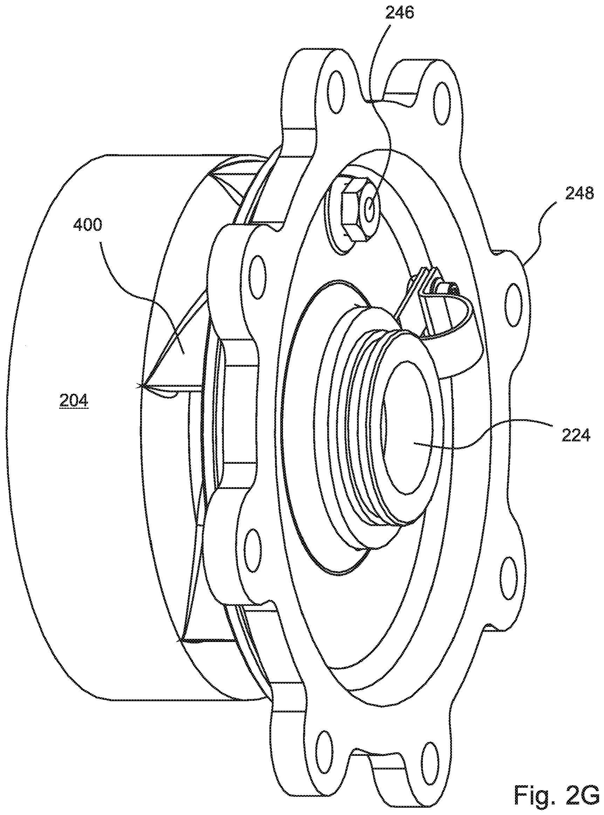

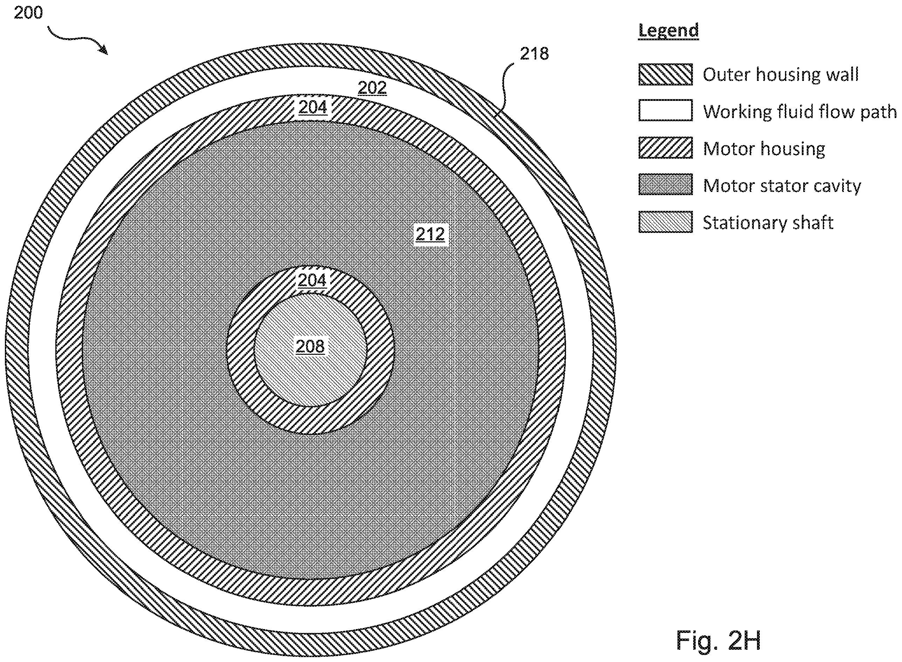

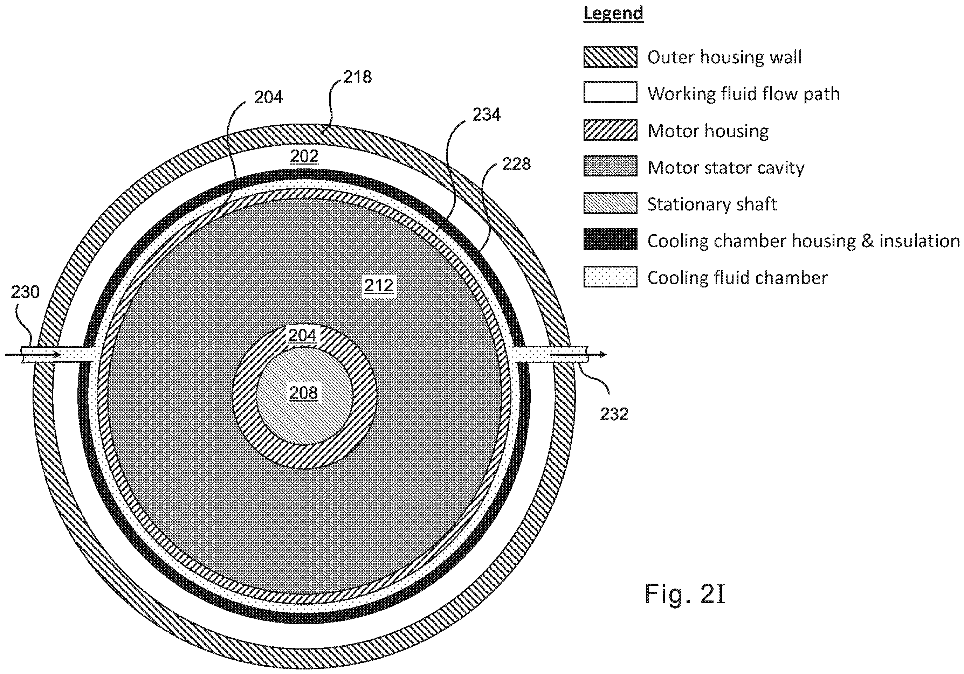

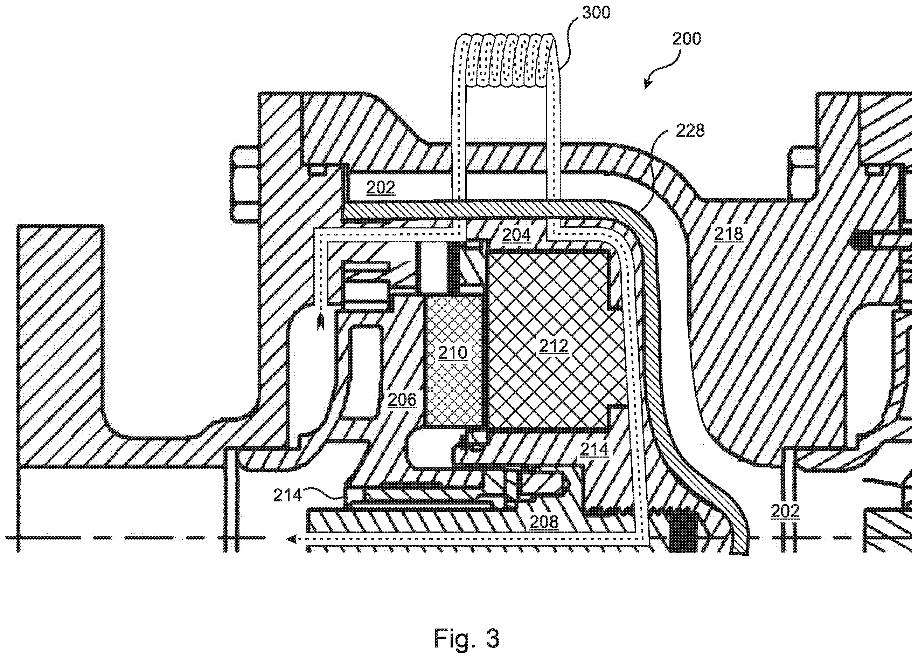

Fig. 3 is a cross-sectional view drawn to scale of an embodiment similar to Fig. 2, but including a separate cooling flow path (cooling path not drawn to scale);

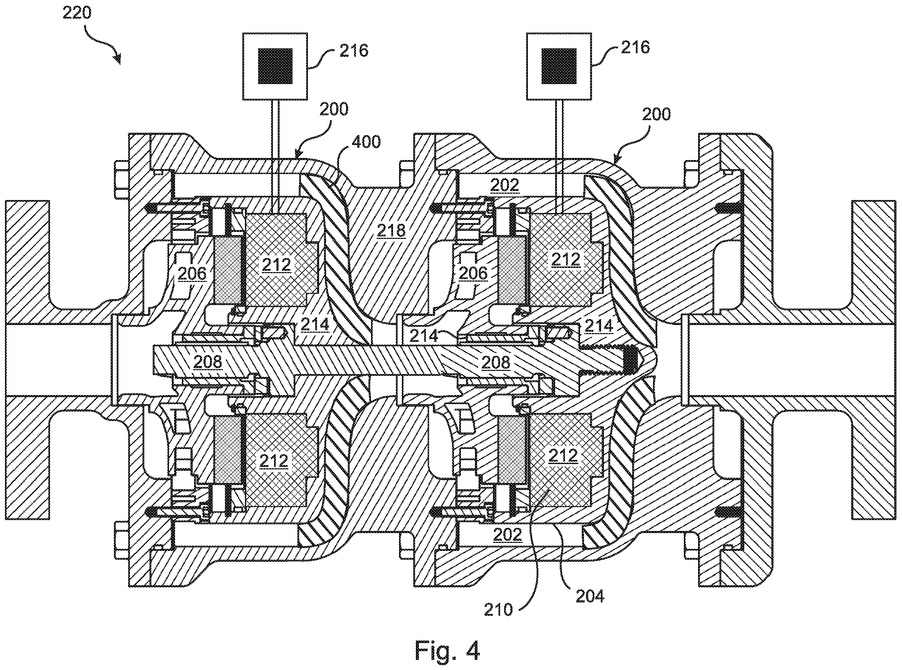

Fig. 4 is a cross-sectional view drawn to scale of an embodiment similar to Fig. 2, but including guide vanes in the process flow path;

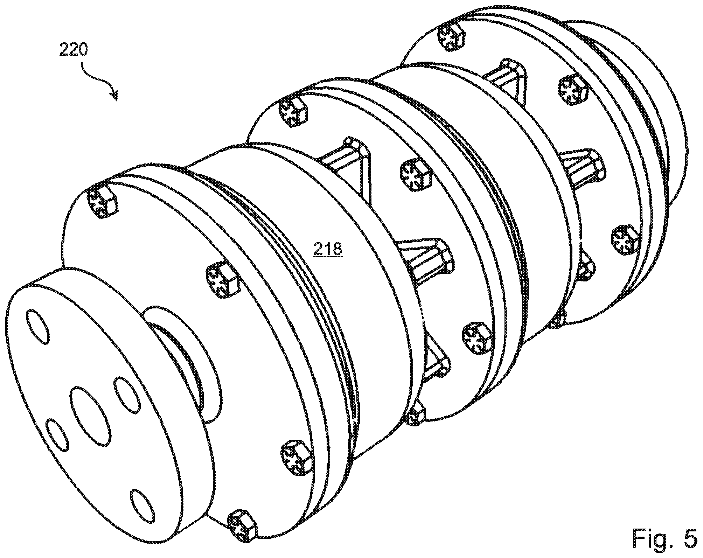

Fig. 5 is a perspective view drawn to scale of the outer housing of the pump of Figs. 2C through 2G;

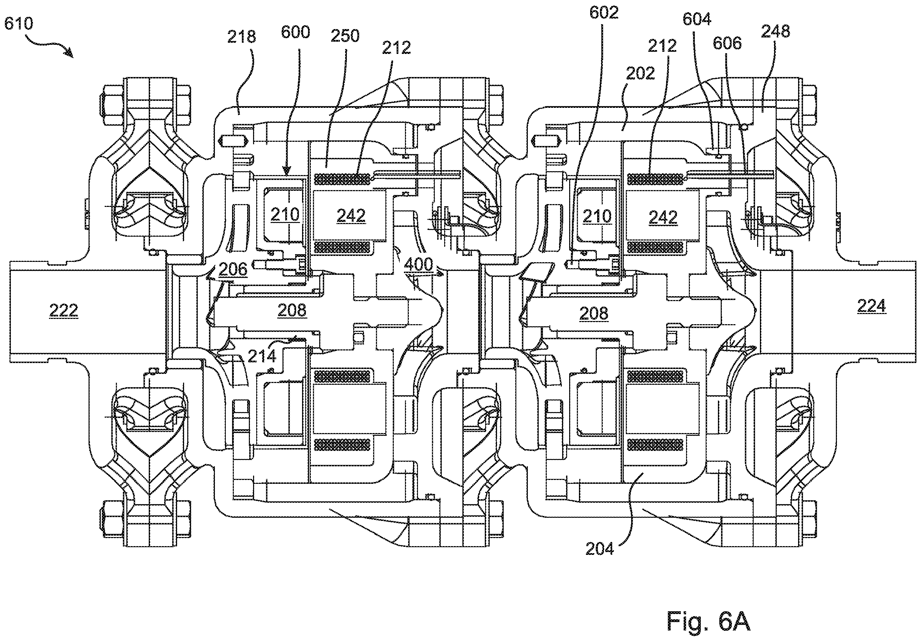

Fig. 6A is a cross-sectional view from the side drawn to scale of a two-stage embodiment of the present invention having a modular motor design;

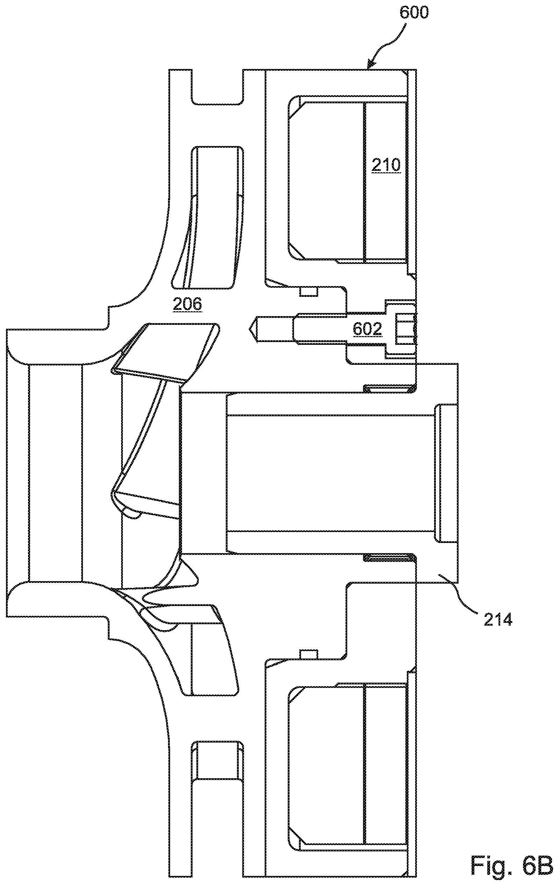

Fig. 6B is a cross-sectional view from the side drawn to scale of one of the rotor and magnet structure assemblies of the embodiment of Fig. 6A;

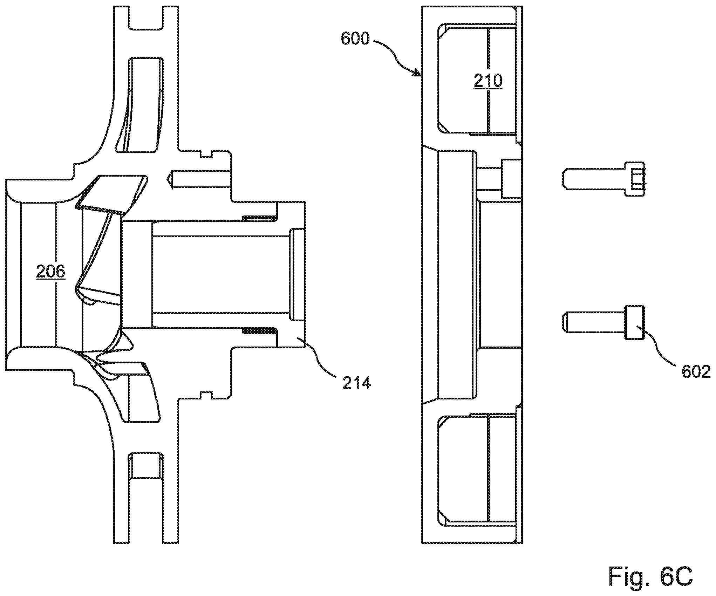

Fig. 6C is an exploded cross-sectional view from the side drawn to scale of the rotor and magnet structure of Fig. 6B;

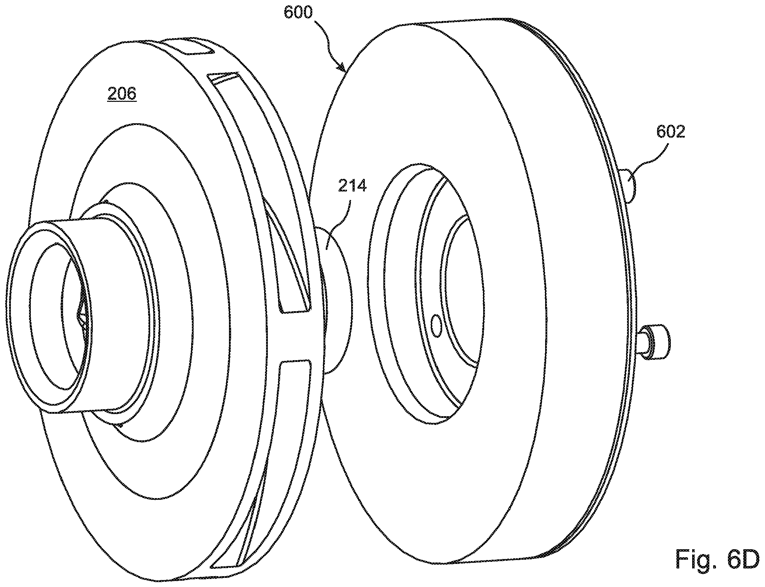

Fig. 6D is an exploded perspective view drawn to scale from the side and front of the rotor and magnet structure of Fig. 6C;

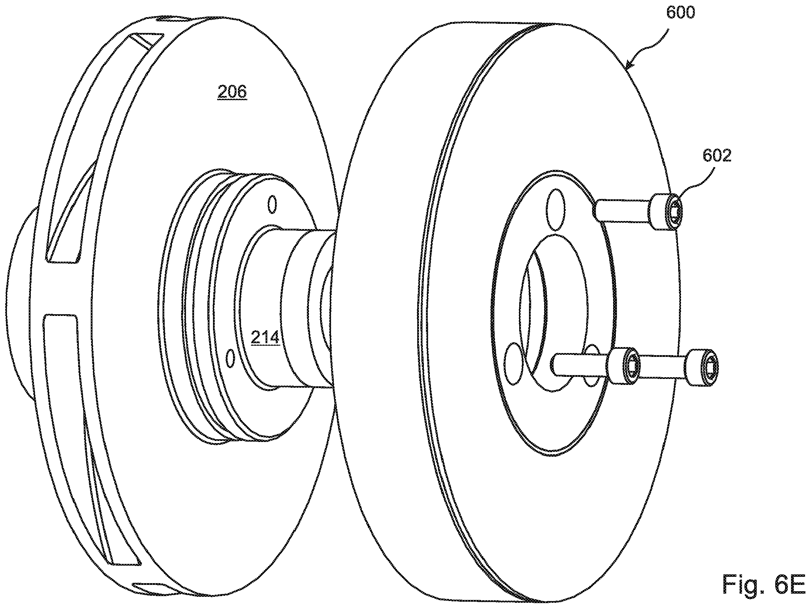

Fig. 6E is an exploded perspective view drawn to scale from the side and rear of the rotor and magnet structure of Fig. 6D;

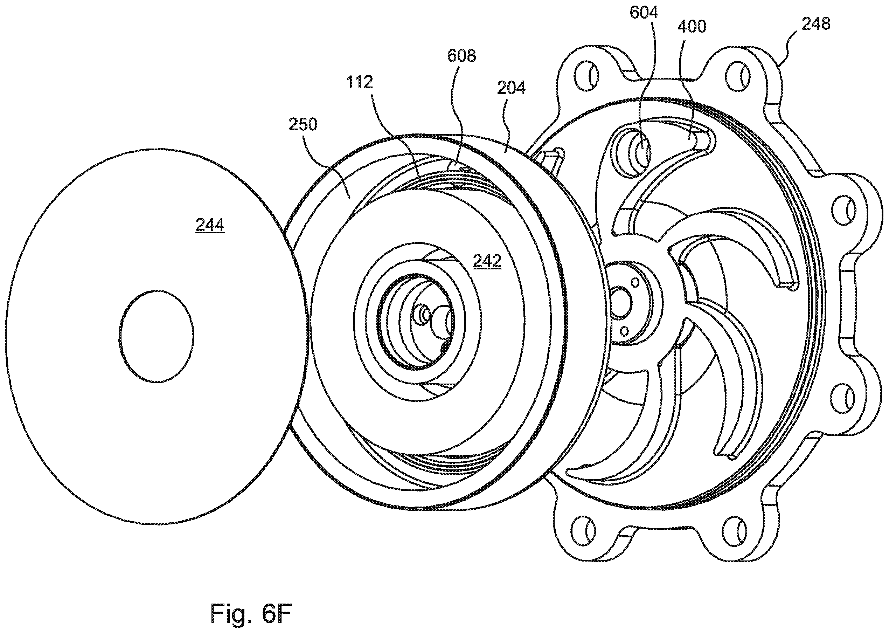

Fig. 6F is an exploded perspective view drawn to scale from the side and front of one of the stator assemblies of Fig. 6A shown with the rear plate removed;

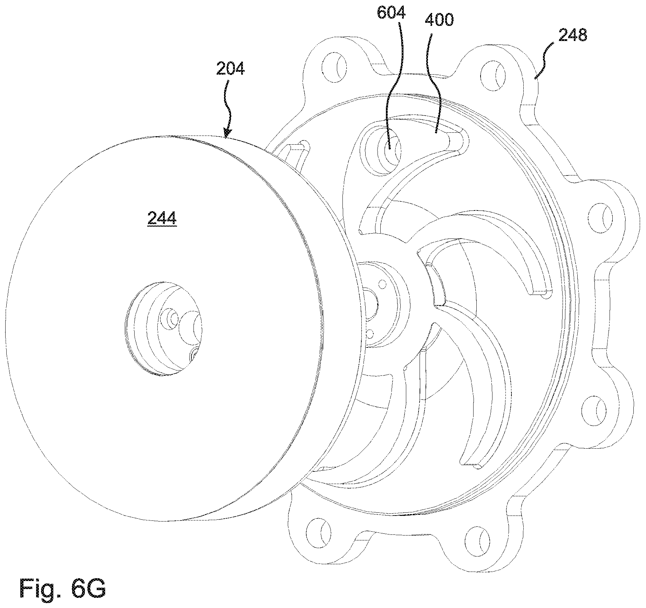

Fig. 6G is an exploded perspective view drawn to scale from the side and front of the stator assembly Fig. 6F shown with the rear plate welded in place;

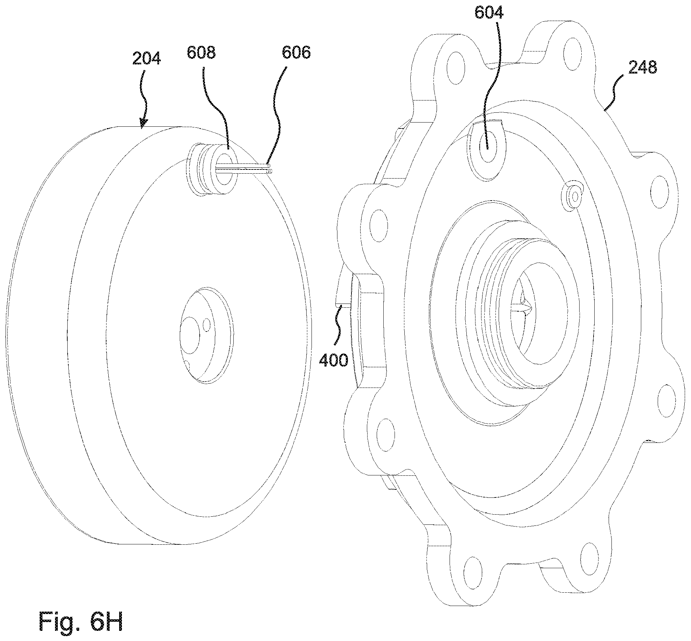

Fig. 6H is an exploded perspective view drawn to scale from the side and rear of the stator assembly with welded rear plate of Fig. 6G;
Fig. 61 is a perspective view drawn to scale of the outer housing of the pump of Figs. 6A through 6H;

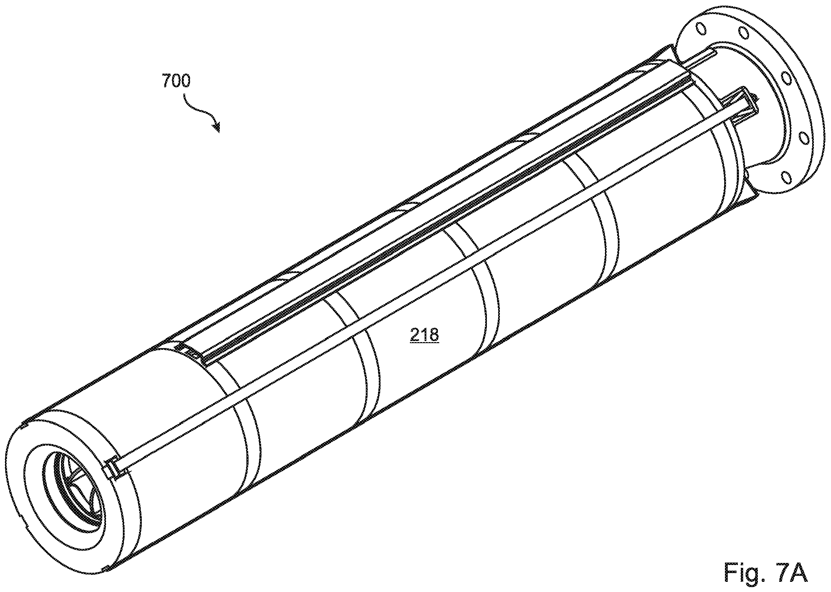

Fig. 7A is a perspective view drawn to scale of a four-module pump of a design that differs from the pump of Figs. 6A through 6H, but incorporates the same modular stator and magnet structure designs that are included in the pump modules of Figs. 6A through 6H;

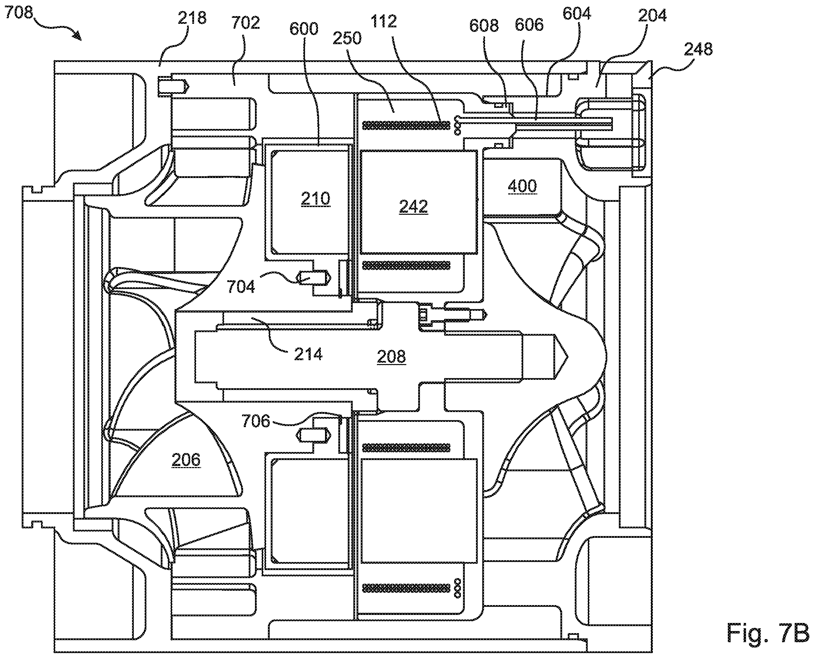

Fig. 7B is a cross-sectional view drawn to scale from the side drawn to scale of a single module of the pump of Fig. 7A; and

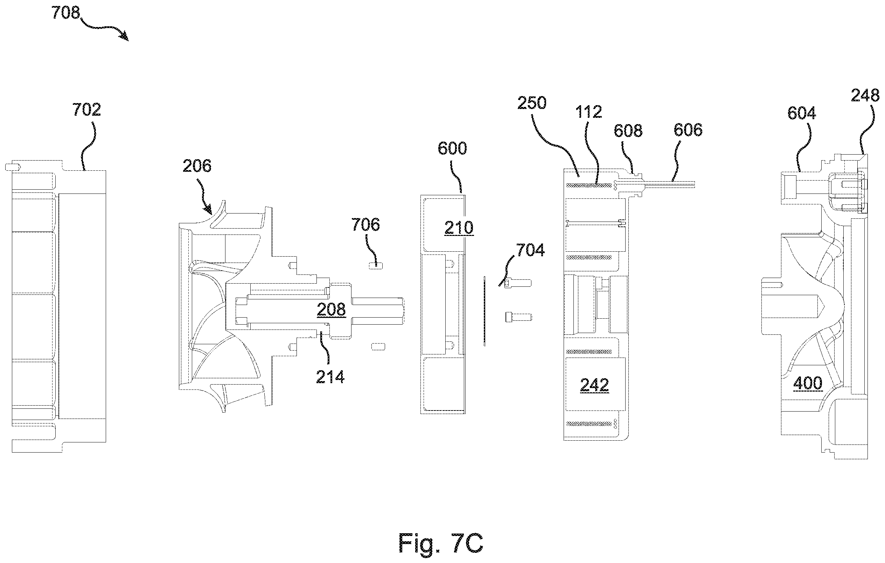

Fig. 7C is an exploded cross-sectional view drawn to scale from the side drawn to scale of the module of Fig. 7B.

### DETAILED DESCRIPTION

The present invention is a "sealless" motor pump or sealless generator turbine that is configured as a module having a "concentric" flow design. As an example, a pump embodiment **200** of the present invention is illustrated in Fig. 2A. It can be seen in the figure that the housing **204** of the motor coils **212,** i.e. the stator housing **204,** is surrounded by the housing **218** of the module, forming an annular space **202** therebetween. According to the present invention, the working fluid is distributed about the annular space **202,** either among a plurality of flow passages or through a single annular flow passage. The distribution of the working fluid in the annular space **202** can be symmetric about the stator housing **204.** In the embodiment of Fig. 2A, the annular space **202** serves as an annular flow passage **202** through which the working fluid flows from the inlet **222** to the outlet **224.**

In the embodiment of Fig. 2A, the annular flow passage **202** is in direct thermal contact with the housing **204** of the motor coils **212.** This configuration is suitable for applications where the working fluid is relatively cool. In the illustrated embodiment, the working fluid is directed by the rotor **206** to pass through the annular flow passage **202** over and around the motor coil housing **204** of the module, so that the motor coils **212** are directly cooled by the discharge of the rotor **206,** and do not require a separate, dedicated cooling fluid.

In embodiments, the concentric design of the present invention is implemented as a self-contained, highly compact module that can be used alone, as shown in Fig. 2A, or combined with a plurality of identical modules to form a multi-stage pump or turbine, as shown in Fig. 2B. This modular approach enables extension of the design to an arbitrary number of stages without adding additional complexity or complications to the design, operation, and maintenance of the apparatus. In particular, high stage counts do not raise any issues regarding shaft size, shaft deflection, roto-dynamics, bearing loads, motor alignment, or alignment between stages.

More specifically, Fig. 2B illustrates a two-stage pump embodiment **220** wherein a central axis of the motor **212** in each stage **200** is substantially collinear with the stationary shaft **208** about which the rotor **206** is rotated, such that the process fluid from the rotor **206** flows axially over the stator housing **204** through the annular flow passage **202** formed between the stator housing **204** and the pump housing **218** in each stage **200.** While only two stages **200** are shown in Fig. 2B for convenience of illustration, it will be understood that embodiments are extendable to an arbitrary number of pump stages **200.**

In some multi-stage embodiments, the rotor **206** in each stage **200** is independently driven, such that the rotor speed of each stage **200** can be separately controlled. For example, a separate variable frequency drive ("VFD") **216** can be dedicated to the control of each stage **200** of the pump.

In the embodiment of Fig. 2B, in each stage **200** of the pump **220** a plurality of permanent magnets **210** are directly attached to a rear side of the rotor **206,** and are caused to pass close to electromagnetic coils **212** of an adjacent stator **212** as the rotor **206** is rotated. Rotors **206** in other embodiments include induction motors that utilize non-permanent magnets **210** such as "squirrel cage" rotor coils in which currents are induced by the stator electromagnets **212** during pump or turbine operation. Torque is thereby transmitted directly from the electromagnet motor coils **212** to the rotor **206,** or electromagnetic energy is transferred from the rotor to the generator coils, without the use of a rotating shaft. In embodiments, the motor coils **212** are sealed from the working fluid using static sealing methods (not shown), which eliminates any need for dynamic mechanical seals, and avoids the problems of alignment, leakage, and/or maintenance that would otherwise arise therefrom.

Axial and radial locating of the rotor **206** in each stage is provided in the embodiment of Fig. 2B by product-lubricated bearings **214.** By using individual bearings **214** for each rotor stage **200,** the bearings **214** in each stage **200** can be designed to handle the loads from that stage only, and the risk of overloading bearings from combined stage loading in a multistage arrangement **220** is completely eliminated. Using the working fluid as a lubricant for the bearings **214** in embodiments eliminates the need for an external oil lubrication system and greatly simplifies the overall pump design and maintenance.

Figs. 2C through 2E are, respectively, an exploded sectional view from the side, an exploded perspective view, and an exploded perspective sectional view of one of the rotor assemblies in an embodiment similar to Fig. 2B. In the illustrated embodiment, the magnets **210** are included in a magnet structure **252** that further comprises a magnet "back iron" **236** and a magnet structure cover plate **238.** The assembled magnet structure **252** is installed in an annular cavity **240** provided in the rotor **206.**

Figs. 2F and 2G are front and side perspective views, respectively, of one of the stator assemblies of the embodiment of Figs 2B through 2E. The stator coil (not shown) is wound on a form **242** within a coil cavity **250** and covered by a stator cover plate **244.** The electrical leads from the coil **212** are directed through an electrical port **246** that extends from the interior of the coil cavity **250** through a stator rear flange that is sealed to the pump or turbine housing **200.** In embodiments the stator coil **212** is potted within the coil cavity **250.**

In some embodiments, such as Fig. 2A, the rotor **206** in each stage is fixed to a rotating shaft **208.** In other embodiments, such as Fig. 2B, the shaft **208** in each stage is inserted through the hub of the rotor **206** and fixed to the motor or generator coil housing **204,** and the rotor **206** rotates about the shaft **208,** e.g. on bearings **214.** This approach facilitates easy assembly and maintenance without special tools. In similar embodiments, the shaft **208** is threaded or otherwise supported by the pump or turbine module housing **218,** or by any combination of the pump or pump module housing **218** and the motor or generator stator housing **204.**

Certain embodiments include modules **200** having an inverted rotor/stator configuration, whereby the rotor **206** and the stator **212** can both rotate independently from each other in opposite directions. Some embodiments include a plurality of rotors **206** fixed to a common fixed or rotating shaft **208,** combined with stators and/or diffusers that rotate individually. In some of these embodiments, the diffusers are implemented in a manner similar to the disclosure of patent application US 15/101,460, which is included herein by reference in its entirety for all purposes.

In still other embodiments, there is no shaft **208,** and instead a wear ring clearance on the front of each rotor **206** acts as the primary radial and axial bearing. Torque is thereby transmitted directly from or to the electromagnet stator coils **212** of the motor to the rotor, or electromagnetic energy is transferred from the rotor **206** to the coils **212** of the generator, without the use of a rotating shaft.

Fig, 2H is a simplified cross-sectional illustration of an embodiment having an annular flow passage, similar to Fig. 2A, where the cross section is taken through the pump motor coils **212** perpendicular to the primary axis of the motor.

The embodiments of Figs. 2A through 2H are suitable for use with relatively cool working fluids, whereby the annular flow passage **202** brings the working fluid into direct thermal contact with the motor or generator coil housing **212,** thereby cooling the motor or generator coils. In Figs. 2A through 2H, more than 80% of the working fluid is brought into thermal contact with the motor or generator coil housing **212,** and at least 20% of the motor or generator coil housing **212** is in thermal contact with the annular flow path **202.** In various embodiments, more than 90% of the working fluid is brought into thermal contact with the motor or generator coil housing **204,** and at least 50% of the motor or generator coil housing surface **204** is in thermal contact with the annular flow path **202.**

With reference to Fig. 21, in some embodiments where a high temperature working fluid is anticipated, the design of Fig. 2H is modified by including an additional concentric layer of thermal insulation **228** between the annular flow passage(s) **202** and the housing **204** of the motor or generator coils **212.** In some of these embodiments, a concentric cooling annular passage **234** is further created between the insulation **228** and the coil housing **204,** through which a cooling fluid, such as water or a cooling oil, can be circulated from an inlet **230** to an outlet **232.**

With reference to Fig. 2J, in other embodiments the working fluid is distributed among a plurality of substantially identical flow passages **226** arranged symmetrically within the annular space **202** about the circumference of the stator housing **204.** In the embodiment of Fig. 2J, the flow passages **226** are formed by the module housing walls **218.** The embodiment of Fig. 2J further includes a concentric annular layer of insulation **228** and concentric cooling annular passage **234,** similar to Fig. 21.

With reference to Fig. 3, in embodiments a small amount of the working fluid is diverted through a separate cooling path **300,** where it is cooled and then circulated through the concentric annular cooling passage **234** in thermal contact with the stator housing **204** to cool the motor coils **212.** In similar embodiments, a separate cooling fluid, such as water or a cooling oil, is circulated through the cooling path **300** without diverting any of the working fluid.

Fluid cooling of the motor or generator coils **212** in various embodiments allows the system to operate with high temperature working fluids, and also enables the system to provide higher performance limits and greater power density in the overall pump or turbine even if the working fluid is not elevated in temperature.

With reference to Fig. 4, embodiments include guide vanes **400,** either in the annular flow space **202** if the flow passage is annular, or elsewhere in the flow path. In the illustrated embodiment, the guide vanes **400** control the flow of the process fluid in a section of the concentric flow path at the end of the motor or generator coils **212,** where the flow path turns radially inward toward the central axis of the module. The guide vanes **400** break the flow path into a plurality of separate but symmetric paths until the flow reaches the central axis and flows axially out through the outlet **224** and into the next stage **200.** In embodiments, the guide vanes **400** direct the process fluid within the flow path into close proximity with the motor or generator stator housing **204.**

The guide vanes **400** can also provide a casing wall that can be used to route power cables from the sealed motor or generator **212,** through the fluid passages **202,** and out of the pump casing **218** to the variable frequency control **216.** In embodiments, the guide vanes **400** also act as fins to provide additional convective surface area to cool the motor or generator coils **212,** and/or to provide space for integral cooling passages **300** connected to an external cooling fluid source.

Fig. 5 is a perspective view of the exterior of the pump of Figs 2C -2G.

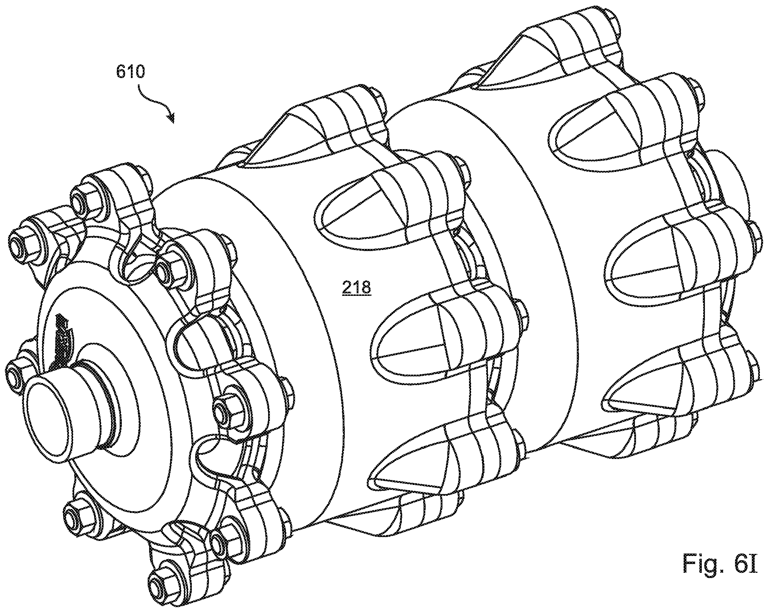

With reference to Fig. 6A, in various embodiments **610** the motor or generator is modular in design, whereby a given motor or generator design can be incorporated into a plurality of different pump or turbine designs. In the example of Fig. 6, the plurality of magnetic devices **210** that are cooperative with the rotor of the motor are incorporated in a detachable magnet structure **600** that can be fixed to and removed from the rotor **206** of the pump **200.** Attachment of the magnet structure **600** to the rotor can be by any means known in the art that is able to constrain the magnet structure **600** both axially and rotationally in relation to the rotor. Some embodiments include threaded attachment of the magnet structure to the rotor that constrains the magnet structure both axially and rotationally. In the embodiment of Fig. 6, the magnet structure **600** is attached to the rotor **206** by bolts **602** that constrain the magnet structure **600** to the rotor **206** both axially and rotationally.

The embodiment of Fig. 6A further includes an electrical port **608** (see Fig. 6H) that provides a sealed conduit extending from the coil cavity **250** within the stator housing **204** that contains the stator coil **212** through a rear flange **248** of the module housing 218, thereby providing a path for electrical leads **606** and/or control lines to extend between the stator coil **212** and the environment external to the pump **200.** It can be seen in the figure that the module housing 218 includes a flange **248** bolted and sealed to a rear end thereof. The flange **248** includes a female socket **604** into which the electrical port **608** is inserted, and with which the electrical port **608** forms an O-ring seal.

In embodiments, the magnet structure **600** and/or the stator portion **204** of the motor or turbine that contains the stator coils is/are modular and fully sealed, thereby requiring only mechanical attachment to the housing **200** of the pump or turbine in proximity to each other. In various embodiments, sealed modular magnet structures **600** and/or sealed modular stator assemblies **204** of the present invention can be implemented in different combinations, rendering it unnecessary to configure new instantiations of the magnet structure **600** and/or stator assembly **204** each time a new pump or turbine module is designed.

Fig. 6B is an enlarged cross-sectional view of one of the rotors **206** and magnet structures **600** of Fig. 6A shown as assembled. Fig. 6C is a cross-sectional exploded view of the rotor **206** and magnet structure **600** of Fig. 6B. Figs. 6D and 6E are front and rear exploded perspective views of the rotor **206** and magnet structure **600** of Fig. 6B. Fig. 6F is an enlarged exploded perspective view from the front of one of the stator assemblies of Fig. 6A, shown in relationship to the rear flange **248** of the pump housing. It can be seen that the guide vanes **400** that are located in the exit flow path of the process fluid are fixed to the rear flange **248,** wherein the rear plate **244** of the module has been removed to reveal the interior. Fig. 6G is identical to Fig. 6F, except that the rear plate **244** has been welded in place, thereby completing the sealed stator module. Fig. 6H is an enlarged exploded perspective view from the rear of the stator assembly of Fig. 6G. The electrical port **608** that serves as a conduit for the stator coil leads **606** is clearly visible in the figure. Fig. 61 is a perspective view of the fully assembled pump **610** of Fig. 6A.

Fig. 7A is a perspective view of a four-module pump design **700** that is considerably different from the pump of Figs. 6A through 6H. Fig. 7B is a cross-sectional illustration of a single module **708** of the pump of Fig. 7A, and Fig. 7C is an exploded cross-sectional view of the module **708** of Fig. 7B. It can be seen in the figures that a diffuser **702** is included in the illustrated design, and that the rear flange **248,** pump rotor **206,** stator housing **204** and pump housing **218** are all quite different from the designs shown in Figs. 6A through 6H. Nevertheless, the pump **700** of Figs. 7A through 7C incorporates essentially the same modular motor components as are included in Figs. 6A through 6H. The only small difference is that, in the illustrated embodiment, a snap ring **704** is used to constrain the magnet structure **600** axially, and pins **706** are used to constrain the magnet structure **600** rotationally. However, it is obvious that bolts could be used to constrain the magnet structure, as in Figs. 6A through 6H, with only a trivial modification to the design.

In Fig's 2B, 4, 6A and 6H, only two pump modules **200** are shown, while the pump **700** of Fig. 7 includes five modules. In general, it can be easily seen that in embodiments any number of the disclosed pump or turbine stages **200** can be combined in series without adding additional complexity or complication to the design, operation, and maintenance of the pump or turbine **200.** In particular, high stage counts according to the disclosed design do not raise any issues regarding shaft size, shaft deflection, rotor dynamics, bearing loads, motor alignment, or alignment between stages **200.**

Certain embodiments include at least some drive electronics that are shared between more than one stage. For example, in some embodiments AC power is converted to DC power by a common set of large electronics, which is then distributed to the individual pump or turbine stages as needed. Other embodiments include a plurality of variable frequency drives ("VFD's") **216,** and in some of these embodiments the motor or generator coils **212** in each stage **200** of the pump or turbine are independently controlled by a dedicated VFD **216** or other controller. One of the key benefits in some of these embodiments is that the first stage can run at lower speeds than the rest of the pump, so as to accommodate low net positive suction head ("NPSH") and off-peak conditions. In some applications, varying the speed of only the final stage provides a useful approach for precisely controlling the output pressure and/or flow.

Providing an individual VFD drive **216** for each stage **200** can also serve as a fail-safe redundancy, whereby if one stage fails, the rest will continue to operate and the pump will continue to function. The continued function after failure of a pump stage may be with reduced head and flow, or the speed of the remaining stages can be increased to compensate for the lost head and flow of the failed stage. This approach creates a failure scenario wherein the pump continues to operate, possibly at reduced head and flow, until an operator, after becoming aware of the stage failure, has time to safely shut down the system. In contrast, the failure of one stage in a traditional pump or turbine typically results in failure of the entire pump or turbine, with a complete loss of performance and a sudden, uncontrolled shutdown of the system.

In the embodiment of Fig. 2A, the motor is a radial motor that includes permanent magnets mounted about the periphery of the rotor, while the other embodiments that are illustrated in the figures include disk or "pancake" style rotors **206** that incorporate permanent magnets **210** that are positioned behind the rear surfaces of the rotors **206.** Induction motors are used in other embodiments. Some embodiments include variable speed drives that enable the synchronous operating speeds of the pump stages **200** to rise above 3600 rpm.

In the embodiments that are illustrated in the drawings, the pump stages **200** are centrifugal designs having radial flow rotors **206.** Some of these embodiments include rotors with specific speeds up to about 2,000 US units, and ins some embodiments up to 4000 US units and even **5000** US units. Other embodiments include pump stages **200** with radial flux rotor designs.

In the embodiments that are illustrated in the drawings, combined radial and one-way thrust bearings **214** are used in place of separate axial and radial bearings. The illustrated embodiments include stationary shafts **208** inserted through the hubs of the rotors **206** and threaded into the pump stage housing **218,** which facilitate easy assembly and maintenance without special tools. Using a sensor-less motor along with appropriate VFD drives **216** also reduces any requirement for instrumentation on each stage **200** in the illustrated embodiments.

Certain embodiments of the present invention include modular stages 200 having an inverted rotor/stator configuration, whereby the rotor and the stator can both rotate independently from each other in opposite directions. And some embodiments include stators and/or diffusers that rotate individually, for example with separate motors driving the rotors and diffusers. In some of these embodiments, the diffusers are implemented in a manner similar to the disclosure of patent application US15/101,460.

As is well known in the art, roto-dynamic pumps and turbines are often highly similar in their physical designs, such that the difference between a pump and a turbine can sometimes be mainly a question of use rather than structure. Accordingly, while the embodiments that are illustrated in the drawings are pumps, the features of the present invention that are discussed herein with reference to a turbine or to a pump should be understood to refer equally to both, except where the context requires otherwise.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

Although the present application is shown in a limited number of forms, the scope of the invention is not limited to just these forms, but is amenable to various changes and modifications without departing from the annexed claims. The disclosure presented herein does not explicitly disclose all possible combinations of features that fall within the scope of the invention. In particular, the limitations presented in dependent claims below can be combined with their corresponding independent claims in any number and in any order without departing from the scope of this disclosure, unless the dependent claims are logically incompatible with each other.

## Claims

1. A sealless pump or turbine module having an integral motor or generator, the module comprising:
an inlet (222) located at a proximal end of the module, the inlet being on a central axis of the module;
an outlet (224) located at a distal end of the module, the outlet being on the central axis of the module;
a module housing (218) surrounding the module, the module housing (218) being terminated proximate said outlet by a rear flange (248) of the module housing (218);
a rotor (206) suspended within the module housing (218);
a motor within the module housing (218) configured to drive a rotation of the rotor, or a generator within the module housing (218) configured to be driven by rotation of the rotor, the motor or generator comprising:
a stator within a sealed stator housing (204), the stator comprising at least one electromagnet directed toward the rotor, said stator housing (204) being removably axially, radially, and rotationally fixable to the module housing (218);
a plurality of magnetic devices (210) assembled in a magnet structure (600) that is removably constrained to be axially fixed and rotationally cooperative with the rotor (206), the magnetic devices (210) being configured by the magnet structure (600) to pass in proximity to the at least one electromagnet as the rotor (206) rotates;
a flow path symmetrically distributed about the stator housing (218), the module being configured to direct a flow of working fluid from the inlet (222) through the flow path to the outlet (224) such that the working fluid is symmetrically distributed about the stator housing (218) as it flows past the stator within the flow path;
a plurality of guide vanes (400) provided in the flow path, the guide vanes (400) being fixed to the rear flange (248) and configured to break the flow path into a plurality of separate but symmetric paths until the flow reaches the central axis and flows axially out through the outlet (224);
a female socket (604) penetrating one of the guide vanes (400) and the rear flange (248); and
an electrical port (608) extending from the stator housing (204) and configured for insertion into the female socket (604) to provide a sealed passage through which electrical conductors can be directed from the stator coil (212) to apparatus that is external to the module housing.

2. The module of claim 1, wherein the magnetic devices (210) are permanent magnets.

3. The module of any preceding claim except claim 2, wherein the magnetic devices (210) are squirrel cage coils.

4. The module of any preceding claim, wherein the flow path extends over at least 50% of a surface of the stator housing (218), and at least 90% of the working fluid that flows through the module from the inlet (222) to the outlet (224) is caused to flow through in direct thermal contact with the stator housing (218).

5. The module of any preceding claim, further comprising:
thermal insulation interposed between the flow path and the stator housing (218); and
a cooling fluid path formed between the thermal insulation and the stator housing (218), the cooling fluid path being in thermal communication with the stator housing (218) and configured to enable an exchange of heat between the stator housing (218) and a cooling fluid flowing through the cooling fluid path.

6. The module of any preceding claim, wherein the electromagnet of the stator is directed toward a radial periphery of the rotor (206), and the magnetic devices (210) are fixed near the radial periphery of the rotor (206).

7. The module of any preceding claim except claim 6, wherein the electromagnet of the stator is directed toward a side of the rotor (206), and the magnetic devices (210) are fixed to the side of the rotor (206) or to a disk that is coaxial with and proximal to the side of the rotor (206).

8. A multi-stage apparatus (610) comprising a plurality of interconnected modules, each of said modules being a module according to any preceding claim.

9. The apparatus (610) of claim 8, wherein at least two of the motors or generators of the modules can be independently controlled so as to cause the corresponding rotors to rotate at different rates.

10. The apparatus (610) of claim 9, wherein the two, independently controlled motors or generators are controlled by separate variable frequency drives.

11. The apparatus (610) of any of claims 8-10, wherein the modules are configured such that the apparatus (610) as a whole is able to continue functioning as a pump or as a turbine despite failure of at least one of the modules included in the apparatus (610).

12. The apparatus (610) of any of claims 8-11, further comprising control electronics that provide shared support to at least two of the modules.

13. The apparatus (610) of any of claims 8-12, wherein the plurality of interconnected modules includes at least three interconnected modules.

## Patentansprüche

1. Dichtungsfreies Pumpen- oder Turbinenmodul mit einem integrierten Motor oder Generator, wobei das Modul umfasst:
einen Einlass (222), der an einem proximalen Ende des Moduls angeordnet ist, wobei der Einlass an einer Mittelachse des Moduls befindlich ist;
einen Auslass (224), der an einem distalen Ende des Moduls angeordnet ist, wobei der Auslass an der Mittelachse des Moduls befindlich ist;
ein Modulgehäuse (218), das das Modul umgibt, wobei das Modulgehäuse (218) in der Nähe des genannten Auslasses durch einen hinteren Flansch (248) des Modulgehäuses (218) begrenzt ist;
einen Rotor (206), der innerhalb des Modulgehäuses (218) aufgehängt ist;
einen Motor innerhalb des Modulgehäuses (218), der dazu eingerichtet ist, eine Rotation des Rotors anzutreiben, oder einen Generator innerhalb des Modulgehäuses (218), der dazu eingerichtet ist, durch Rotation des Rotors angetrieben zu werden, wobei der Motor oder Generator umfasst:
einen Stator innerhalb eines abgedichteten Statorgehäuses (204), wobei der Stator zumindest einen Elektromagnet umfasst, der auf den Rotor gerichtet ist, wobei das Statorgehäuse (204) abnehmbar axial, radial und drehungsmäßig am Modulgehäuse (218) fixierbar ist;
eine Vielzahl von magnetischen Vorrichtungen (210), die in einer Magnetanordnung (600) zusammengestellt sind, die abnehmbar gezwungen ist, um axial fest und mit dem Rotor (206) drehungsmäßig zusammenwirkend zu sein, wobei die magnetischen Vorrichtungen (210) von der Magnetanordnung (600) dazu eingerichtet sind, in der Nähe des zumindest einen Elektromagnets zu laufen, während der Rotor (206) sich dreht;
einen Strömungsweg, der um das Statorgehäuse (218) symmetrisch verteilt ist, wobei das Modul dazu eingerichtet ist, einen Strom von Arbeitsmedium von dem Einlass (222) über den Strömungsweg zum Auslass (224) so zu richten, dass das Arbeitsmedium um das Statorgehäuse (218) symmetrisch verteilt ist, während es am Stator innerhalb des Strömungswegs vorbeifließt;
eine Vielzahl von Leitschaufeln (400), die im Strömungsweg vorgesehen sind, wobei die Leitschaufeln (400) am hinteren Flansch (248) befestigt sind und dazu eingerichtet sind, den Strömungsweg in eine Vielzahl von getrennten aber symmetrischen Wegen zu brechen, bis der Strom die Mittelachse erreicht und axial durch den Auslass (224) herausfließt;
eine Steckbuchse (604), die in eine der Leitschaufeln (400) und in den hinteren Flansch (248) eindringt; und
einen elektrischen Anschluss (608), der sich vom Statorgehäuse (204) erstreckt und für die Einfügung in die Steckbuchse (604) eingerichtet ist, um einen abgedichteten Durchgang bereitzustellen, durch welchen elektrische Leiter von der Statorspule (212) zu einem Apparat geleitet werden können, der außerhalb des Modulgehäuses liegt.

2. Modul nach Anspruch 1, worin die magnetischen Vorrichtungen (210) Permanentmagnete sind.

3. Modul nach einem der vorhergehenden Ansprüche außer Anspruch 2, worin die magnetischen Vorrichtungen (210) Käfigläuferspulen sind.

4. Modul nach einem der vorhergehenden Ansprüche, worin der Strömungsweg sich über zumindest 50% einer Oberfläche des Statorgehäuses (218) erstreckt, und zumindest 90% des Arbeitsmediums, das durch das Modul von dem Einlass (222) zu dem Auslass (224) fließt, in direktem Wärmekontakt mit dem Statorgehäuse (218) zum Durchfließen gebracht wird.

5. Modul nach einem der vorhergehenden Ansprüche, ferner umfassend:
Wärmeisolierung, die zwischen dem Strömungsweg und dem Statorgehäuse (218) zwischengeschaltet ist; und
einen Kühlmittelpfad, der zwischen der Wärmeisolierung und dem Statorgehäuse (218) ausgebildet ist, wobei der Kühlmittelpfad sich in Wärmekommunikation mit dem Statorgehäuse (218) befindet und dazu eingerichtet ist, einen Austausch von Wärme zwischen dem Statorgehäuse (218) und einem Kühlmittel, das durch den Kühlmittelpfad fließt, zu ermöglichen.

6. Modul nach einem der vorhergehenden Ansprüche, worin der Elektromagnet des Stators auf einen radialen Umfang des Rotors (206) gerichtet ist und die magnetischen Vorrichtungen (210) nahe dem radialen Umfang des Rotors (206) fest sind.

7. Modul nach einem der vorhergehenden Ansprüche außer Anspruch 6, worin der Elektromagnet des Stators auf eine Seite des Rotors (206) gerichtet ist und die magnetischen Vorrichtungen (210) an der Seite des Rotors (206) oder an einer Scheibe, die koaxial mit und nahe der Seite des Rotors (206) ist, befestigt sind.

8. Mehrstufiger Apparat (610) umfassend eine Vielzahl von miteinander verbundenen Modulen, wobei jedes der genannten Module ein Modul nach einem der vorhergehenden Ansprüche ist.

9. Apparat (610) nach Anspruch 8, worin zumindest zwei der Motoren oder Generatoren der Module unabhängig gesteuert werden können, so dass sie bewirken können, dass die entsprechenden Rotoren mit verschiedenen Geschwindigkeiten rotieren.

10. Apparat (610) nach Anspruch 9, worin die zwei, unabhängig gesteuerten Motoren oder Generatoren durch getrennte Frequenzumrichter-Antriebe gesteuert sind.

11. Apparat (610) nach einem der Ansprüche 8-10, worin die Module so eingerichtet sind, dass der Apparat (610) als Ganzes imstande ist, als Pumpe oder als Turbine trotz eines Versagens von zumindest einem der Module, die im Apparat (610) enthalten sind, weiter zu arbeiten.

12. Apparat (610) nach einem der Ansprüche 8-11, ferner umfassend eine Steuerungselektronik, die zumindest zwei der Module gemeinsame Unterstützung liefert.

13. Apparat (610) nach einem der Ansprüche 8-12, worin die Vielzahl von miteinander verbundenen Modulen zumindest drei miteinander verbundene Module umfasst.

## Revendications

1. Module de pompe ou de turbine sans joint ayant un moteur ou un générateur intégré, le module comprenant :
une entrée (222) située à une extrémité proximale du module, l'entrée étant sur un axe central du module ;
une sortie (224) située à une extrémité distale du module, la sortie étant sur l'axe central du module ;
un boîtier de module (218) entourant le module, le boîtier de module (218) se terminant à proximité de ladite sortie par une bride arrière (248) du boîtier de module (218) ;
un rotor (206) suspendu à l'intérieur du boîtier de module (218) ;
un moteur à l'intérieur du boîtier de module (218) configuré pour entraîner une rotation du rotor, ou un générateur à l'intérieur du boîtier de module (218) configuré pour être entraîné par la rotation du rotor, le moteur ou le générateur comprenant :
un stator à l'intérieur d'un boîtier de stator étanche (204), le stator comprenant au moins un électroaimant dirigé vers le rotor, ledit boîtier de stator (204) pouvant être fixé de manière amovible axialement, radialement et rotativement au logement de module (218) ;
une pluralité de dispositifs magnétiques (210) assemblés dans une structure magnétique (600) qui est contrainte de manière amovible d'être fixée axialement et de coopérer en rotation avec le rotor (206), les dispositifs magnétiques (210) étant configurés par la structure magnétique (600) pour passer à proximité de l'au moins un électroaimant lorsque le rotor (206) tourne ;
un trajet d'écoulement réparti symétriquement autour du boîtier de stator (218), le module étant configuré pour diriger un écoulement de fluide de travail depuis l'entrée (222) à travers le trajet d'écoulement vers la sortie (224) de sorte que le fluide de travail est réparti symétriquement autour du boîtier de stator (218) lorsqu'il s'écoule au-delà du stator à l'intérieur du trajet d'écoulement ;
une pluralité d'aubes directrices (400) prévues dans le trajet d'écoulement, les aubes directrices (400) étant fixées à la bride arrière (248) et configurées pour casser le trajet d'écoulement en une pluralité de trajets séparés mais symétriques jusqu'à ce que l'écoulement atteigne l'axe central et s'écoule axialement à travers la sortie (224) ;
une prise femelle (604) pénétrant dans l'une des aubes directrices (400) et la bride arrière (248) ; et
un orifice électrique (608) s'étendant depuis le logement de stator (204) et configuré pour être inséré dans la prise femelle (604) pour fournir un passage étanche à travers lequel des conducteurs électriques peuvent être dirigés depuis la bobine de stator (212) vers un appareil qui est externe au boîtier de module.

2. Module selon la revendication 1, dans lequel les dispositifs magnétiques (210) sont des aimants permanents.

3. Module selon l'une quelconque des revendications précédentes, à l'exception de la revendication 2, dans lequel les dispositifs magnétiques (210) sont des bobines à cage d'écureuil.

4. Module selon l'une quelconque des revendications précédentes, dans lequel le trajet d'écoulement s'étend sur au moins 50 % d'une surface du boîtier de stator (218), et au moins 90 % du fluide de travail qui s'écoule à travers le module de l'entrée (222) à la sortie (224) est amené à s'écouler à travers en contact thermique direct avec le boîtier de stator (218).

5. Module selon l'une quelconque des revendications précédentes, comprenant en outre :
une isolation thermique interposée entre le trajet d'écoulement et le boîtier de stator (218) ; et
un trajet de fluide de refroidissement formé entre l'isolation thermique et le boîtier de stator (218), le trajet de fluide de refroidissement étant en communication thermique avec le boîtier de stator (218) et configuré pour permettre un échange de chaleur entre le boîtier de stator (218) et un fluide de refroidissement s'écoulant à travers le trajet de fluide de refroidissement.

6. Module selon l'une quelconque des revendications précédentes, dans lequel l'électroaimant du stator est dirigé vers une périphérie radiale du rotor (206), et les dispositifs magnétiques (210) sont fixés à proximité de la périphérie radiale du rotor (206).

7. Module selon l'une quelconque des revendications précédentes, à l'exception de la revendication 6, dans lequel l'électroaimant du stator est dirigé vers un côté du rotor (206), et les dispositifs magnétiques (210) sont fixés au côté du rotor (206) ou à un disque qui est coaxial avec et proximal par rapport au côté du rotor (206).

8. Appareil à plusieurs étages (610) comprenant une pluralité de modules interconnectés, chacun desdits modules étant un module selon l'une quelconque des revendications précédentes.

9. Appareil (610) selon la revendication 8, dans lequel au moins deux des moteurs ou générateurs des modules peuvent être commandés indépendamment de manière à amener les rotors correspondants à tourner à des vitesses différentes.

10. Appareil (610) selon la revendication 9, dans lequel les deux moteurs ou générateurs à commande indépendante sont commandés par des entraînements à fréquence variable séparés.

11. Appareil (610) selon l'une quelconque des revendications 8 à 10, dans lequel les modules sont configurés de telle sorte que l'appareil (610) dans son ensemble est capable de continuer à fonctionner comme une pompe ou comme une turbine malgré la défaillance d'au moins l'un des modules inclus dans l'appareil (610).

12. Appareil (610) selon l'une quelconque des revendications 8 à 11, comprenant en outre une électronique de commande qui fournit un support partagé à au moins deux des modules.

13. Appareil (610) selon l'une quelconque des revendications 8 à 12, dans lequel la pluralité de modules interconnectés comprend au moins trois modules interconnectés.
